# EUROPEAN PATENT APPLICATION

(11) **EP 4 092 586 A1**
(43) Date of publication of application: **23.11.2022**
(21) Application number: 22172785.2
(22) Date of filing: 11.05.2022
(51) Int. Cl.: G06N 20/00, G06N 5/02

(54) **METHOD AND SYSTEM FOR EXPLAINABLE MACHINE LEARNING USING DATA AND PROXY MODEL BASED HYBRID APPROACH**

(30) Priority: 18.05.2021 IN 202121022257
(71) Applicant: Tata Consultancy Services Limited, Maharashtra (IN)
(72) Inventor: SANGROYA, Amit, 122003 Gawal Pahari, Gurgaon (IN); VIG, Lovekesh, 122003 Gawal Pahari, Gurgaon (IN); RASTOGI, Mouli, 122003 Gawal Pahari, Gurgaon (IN); ANANTARAM, Chandrasekhar, 122003 Gawal Pahari, Gurgaon (IN)
(74) Representative: Goddar, Heinz J.

(57) **Abstract**

Conventionally three main approaches are utilized for explainability of blackbox ML systems: proxy or shadow model approaches, model inspection approaches and data based approaches. Most of the research work on explainability has followed one of the above approaches with each having its own limitations and advantages. Embodiments of the present disclosure provide a method and system for explainable Machine learning (ML) using data and proxy model based hybrid approach to explain outcomes of a ML model. The hybrid approach is based on Local Interpretable Model-agnostic Explanations (LIME) using Formal Concept Analysis (FCA) for structured sampling of instances. The approach combines the benefits of using a data-based approach (FCA) and proxy model-based approach (LIME).

## Description

### CROSS-REFERENCE TO RELATED APPLICATIONS AND PRIORITY

The present application claims priority to Indian application no.. 202121022257, filed on 18 May 2021.

### TECHNICAL FIELD

The embodiments herein generally relate to explainable Machine Learning (ML) and, more particularly, to a method and system for explainable ML using data and proxy model based hybrid approach.

### BACKGROUND

Explainability is an important aspect for an AI system in order to increase the trustworthiness of its decision making process. Many blackbox deep learning models are being developed and deployed for real-world use. An example is Google's Diabetic Retinopathy System^{™}. For such blackbox systems neither the model details nor its training dataset is made publicly available. To provide explanations of the predictions made by such blackbox systems has been a great challenge. Apart from post-hoc visualization techniques (e.g., feature dependency plots), feature importance techniques based on sensitivity analysis, there have been three main approaches for explainability of AI systems: i) Proxy or Shadow model approaches like Local Interpretable Model-agnostic Explanations (LIME), SHapley Additive exPlanations (SHAP) ii) Model inspection approaches like Class Activation maps (CAM), Grad-CAM, Smooth-Grad-CAM, etc., and iii) Data based approaches like Decision sets and Formal Concept Analysis. Most of the research work on explainability have followed one of the above approaches. However, each of these approaches has limitations in the way the explanations are generated. In the proxy model approach, the data corpus needs to be created by perturbing the inputs of the target blackbox model and then an interpretable shadow model is built, while in the model inspection approach, the model architecture needs to be available for inspection to determine the activations, and in the databased approach the training data needs to be available. Local shadow or proxy models are interpretable models that are used to explain individual predictions of blackbox Machine learning models. LIME is a well-known approach where shadow models are trained to approximate the predictions of the underlying blackbox model. LIME focuses on training local shadow models to explain individual predictions, wherein a prediction of interest *yᵢ* of the target blackbox deep learning model is considered and its related input features *xᵢ*'s are perturbed within a neighborhood proximity to measure the changes in predictions. Based on a reasonable sample of such perturbations a dataset is created and a locally linear explainable model is constructed. To cover the decision-making space of the target model, Submodular Pick-LIME (SP-LIME) generates the global explanations by finding a set of points whose explanations (generated by LIME) are varied in their selected features and their dependence on those features. SP-LIME proposes a sampling way based on sub-modular picks to select instances such that the interpretable features have higher importance. If explanation output of LIME is analyzed for any binary classification problem, using say a Heart Disease dataset. It can be observed that some noisy features are also injected in the dataset and therefore are present in the explanation (af1, af2, af3 and af4) of LIME as well. In an ideal scenario, noisy features should not be the most relevant features for any ML model and therefore should be least important from an explanation point of view. However, due to proxy model inaccuracies and unreliability, sometimes these noisy features can also come as the most relevant features in explanations. Assuming that a blackbox machine learning model and a proxy model that explains this blackbox ML model is available, it is intended that these models should be closer to each other in terms of their calibration levels. Ideally, a proxy model which is used for explaining the machine learning model should be as close as possible to the original model (black box machine learning model).

The SP-LIME has been used to generate global explanations of a blackbox model. SP-LIME carries out submodular picks from a set of explanations generated for a given set X of individual data instances. The SP-LIME algorithm picks out explanations based on feature importance across generated explanations. However, the data instances X from which explanations are generated, are either the full dataset (called Full-LIME) or data points sampled from a Gaussian distribution (SP-LIME random) and ignore the correlation between features in the dataset. Carrying out SP-LIME for the full dataset (Full-LIME) is very time consuming especially when the dataset is large. Carrying out SPLIME random on the dataset may end up considering data points that are implied by other data points in the explanation space.

### SUMMARY

Embodiments of the present disclosure present technological improvements as solutions to one or more of the above-mentioned technical problems recognized by the inventors in conventional systems.

For example, in one embodiment, a method for explainable ML using data and proxy model based hybrid approach is provided. The method includes receiving a training dataset, wherein the training dataset is used for a) training a ML model for generating predictions of interest and b) identifying a plurality of test instances from the training dataset to be used by a proxy model to provide global explanations for the predictions of interest. Further, includes sampling the training dataset to identify the plurality of test instances. The sampling process comprising: a) extracting a plurality of features from the training dataset with each of the plurality of features having continuous attribute values; b) binarizing each of the plurality of features to discretize the continuous attribute values to '1' and '0'; c) generating a concept lattice for the binarized plurality of features of the training dataset using a Formal Concept Analysis (FCA) based approach. The concept lattice comprises a plurality of concepts representing data of the training dataset and attribute relationships within the training dataset by arranging the training dataset into hierarchical groups based on commonality among the binarized plurality of features; d) deriving and ranking a plurality of implication rules from the concept lattice to generate a ranked list, wherein the plurality of implication rules are derived based on the FCA approach; e) selecting a predefined number of implication rules from the ranked list arranged in ascending order of rank; and f) identifying the plurality of test instances from the training dataset corresponding to each of the selected predefined number of implication rules.

Furthermore, the method includes forward the plurality of test instances to the proxy model to generate global explanations for the predictions of interest of the ML model using a Submodular Pick - Local Interpretable Model-agnostic Explanations (SP-LIME) approach.

In another aspect, a system for explainable ML using data and proxy model based hybrid approach is provided. The system comprises a memory storing instructions; one or more Input/Output (I/O) interfaces; and one or more hardware processors coupled to the memory via the one or more I/O interfaces, wherein the one or more hardware processors are configured by the instructions to receive a training dataset, wherein the training dataset is used for a) training a ML model for generating predictions of interest and b) identifying a plurality of test instances from the training dataset to be used by a proxy model to provide global explanations for the predictions of interest. Further, samples the training dataset to identify the plurality of test instances. The sampling process comprising: a) extracting a plurality of features from the training dataset with each of the plurality of features having continuous attribute values; b) binarizing each of the plurality of features to discretize the continuous attribute values to '1' and '0'; c) generating a concept lattice for the binarized plurality of features of the training dataset using a Formal Concept Analysis (FCA) based approach. The concept lattice comprises a plurality of concepts representing data of the training dataset and attribute relationships within the training dataset by arranging the training dataset into hierarchical groups based on commonality among the binarized plurality of features; d) deriving and ranking a plurality of implication rules from the concept lattice to generate a ranked list, wherein the plurality of implication rules are derived based on the FCA approach; e) selecting a predefined number of implication rules from the ranked list arranged in ascending order of rank; and f) identifying the plurality of test instances from the training dataset corresponding to each of the selected predefined number of implication rules.

Furthermore, the forwards the plurality of test instances to the proxy model to generate global explanations for the predictions of interest of the ML model using a Submodular Pick - Local Interpretable Model-agnostic Explanations (SP-LIME) approach.

In yet another aspect, there are provided one or more non-transitory machine-readable information storage mediums comprising one or more instructions, which when executed by one or more hardware processors causes a method for explainable ML using data and proxy model based hybrid approach

The method includes receiving a training dataset, wherein the training dataset is used for a) training a ML model for generating predictions of interest and b) identifying a plurality of test instances from the training dataset to be used by a proxy model to provide global explanations for the predictions of interest. Further, includes sampling the training dataset to identify the plurality of test instances. The sampling process comprising: a) extracting a plurality of features from the training dataset with each of the plurality of features having continuous attribute values; b) binarizing each of the plurality of features to discretize the continuous attribute values to '1' and '0'; c) generating a concept lattice for the binarized plurality of features of the training dataset using a Formal Concept Analysis (FCA) based approach. The concept lattice comprises a plurality of concepts representing data of the training dataset and attribute relationships within the training dataset by arranging the training dataset into hierarchical groups based on commonality among the binarized plurality of features; d) deriving and ranking a plurality of implication rules from the concept lattice to generate a ranked list, wherein the plurality of implication rules are derived based on the FCA approach; e) selecting a predefined number of implication rules from the ranked list arranged in ascending order of rank; and f) identifying the plurality of test instances from the training dataset corresponding to each of the selected predefined number of implication rules.

Furthermore, the method includes forward the plurality of test instances to the proxy model to generate global explanations for the predictions of interest of the ML model using a Submodular Pick - Local Interpretable Model-agnostic Explanations (SP-LIME) approach.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for explainable Machine Learning (ML) using data and proxy model based hybrid approach, in accordance with some embodiments of the present disclosure.
FIG. 1B illustrates an architectural overview of the system of FIG. 1, in accordance with some embodiments of the present disclosure.
FIGS. 2A and 2B (collectively referred as FIG. 2) is a flow diagram illustrating a method for explainable ML using data and proxy model based hybrid approach, using the system of FIG. 1, in accordance with some embodiments of the present disclosure.
FIGS. 3A through 3C (collectively referred as FIG. 3) are graphical illustrations of comparative analysis of the system of FIG. 1 with works in literature, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Global interpretability of Machine Learning models entails seeking to understand the overall structure of the model. This is much bigger and much harder than explaining a single prediction since it involves making statements about how the ML model works in general, not just on one prediction. In order to have a global understanding of the ML model, needed is a representative set of instances. The complete set of instances for global explanation is an expensive task. Therefore, a subset of instances is always useful for reducing the cost of global explanation generation. However, this subset should be optimal such we can manage the tradeoff between cost and completeness well.

Embodiments of the present disclosure provide a method and system for explainable Machine learning (ML) using data and proxy model based hybrid approach to explain outcomes of a ML model by finding an optimal set of test instances from a training dataset for global explanation generation. The hybrid approach utilizes Local Interpretable Model-agnostic Explanations (LIME) based on proxy model (explanation models), wherein a Formal Concept Analysis (FCA) is used for structured sampling of instances for running the explanation models based on Submodular Pick-LIME (SP-LIME) to generate global explanations. The approach combines the benefits of using a data-based approach (FCA) and proxy model-based approach (LIME).

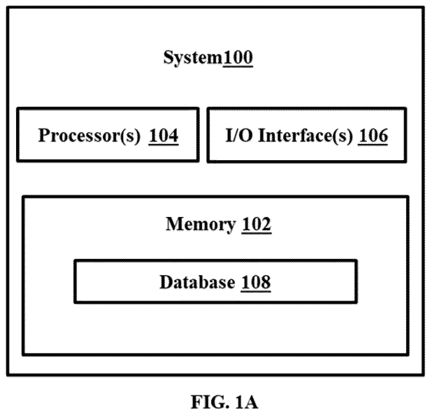

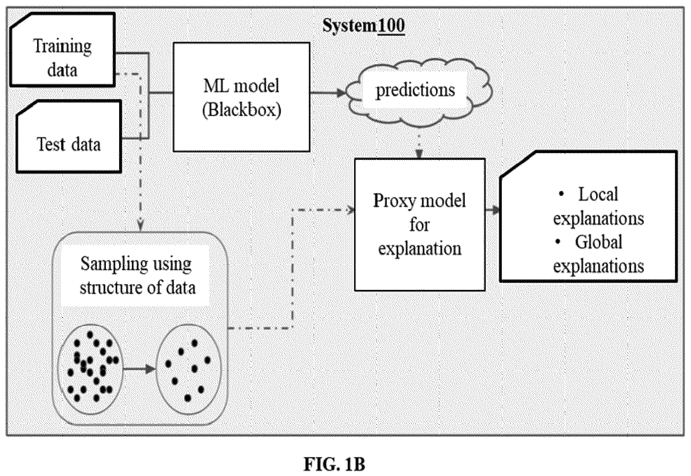

Referring now to the drawings, and more particularly to FIGS. 1 through 3C, where similar reference characters denote corresponding features consistently throughout the figures, there are shown preferred embodiments and these embodiments are described in the context of the following exemplary system and/or method.

FIG. 1A is a functional block diagram of a system 100, for explainable Machine Learning (ML) using data and proxy model based hybrid approach, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

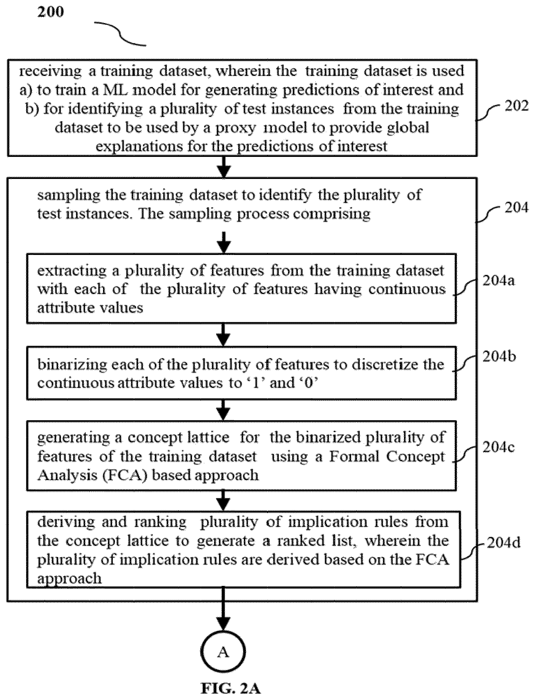

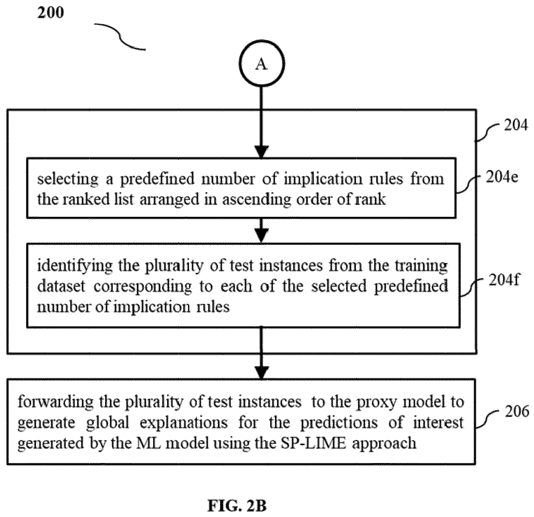

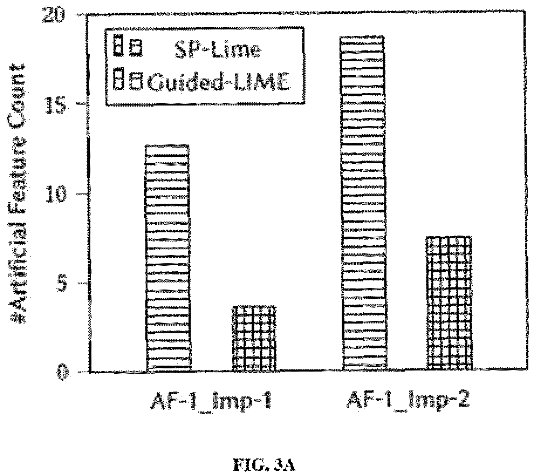

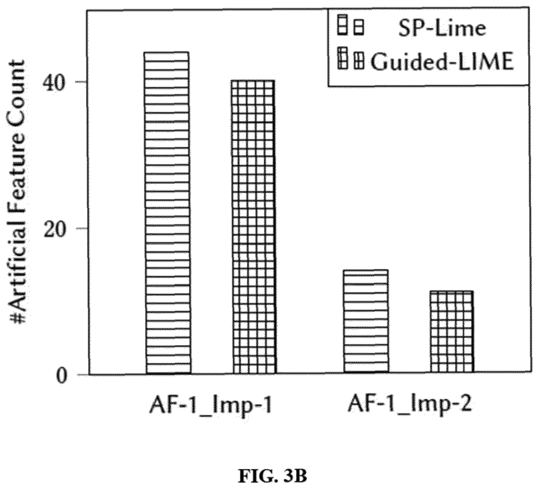

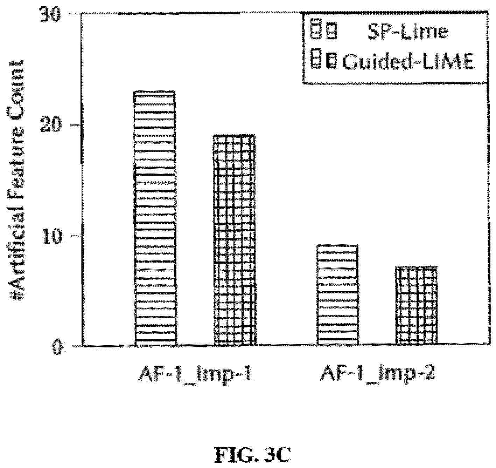

Further, the memory 102 includes modules such as a ML model (not shown), a proxy model (not shown). The memory may also include plurality of techniques known in the art that are used to implement the ML model, the proxy model, the LIME, and the FCA. Further, the memory 102 includes a database 108 that stores the training dataset used to train the ML model, plurality of test instances identified from training dataset used to run the proxy model for generation explanations, concept lattice generated for the training dataset using the FCA, a plurality of implication rules and the like. Further, the memory 102 may comprise information pertaining to input(s)/output(s) of each step performed by the processor(s) 104 of the system100 and methods of the present disclosure. In an embodiment, the database 108 may be external (not shown) to the system 100 and coupled to the system via the I/O interface 106. Functions of the components of the system 100 are explained in conjunction with flow diagram of FIG. 2 and graphical illustrations of FIG. 3.

FIG. 1B illustrates an architectural overview of the system 100 of FIG. 1, in accordance with some embodiments of the present disclosure. The system 100 provides an optimized explanation model obtained using the hybrid approach. The system 100, interchangeably referred to as Guided -Local Interpretable Model-agnostic Explanations (Guided-LIME), utilizes shadow model or proxy model approach of the LIME with the data-based approach of Formal Concept Analysis (FCA) for generating explanation by exploiting the structure in training data. The system utilizes LIME to interpret locally by using a linear shadow model, also referred to as proxy model of the blackbox model and utilizes Formal Concept Analysis to construct a concept lattice of the training dataset. Further, from the concept lattice, implication rules among the features are extracted. Based on the implication rules relevant samples for the global instances are obtained that are then fed to the SP-LIME to generate global explanations. Therefore, rather than using all instances (which is very costly for deep networks) or random sampling (which never guarantees optimal behavior), the method and system disclosed herein utilize FCA guided approach for selecting the instances and hence the system is interchangeably referred to as Guided-Local Interpretable Model-agnostic Explanations (Guided-LIME) system. Experimental results indicate that the Guided-LIME results in better coverage of the explanation space as compared to conventional SP-LIME.

As depicted in the architecture of FIG. IB, the method enables analyzing the full data set and choose only those points for SP-LIME such that the selected data points are representative of the data space. The FCA is used to analyze the training data and discover feature implication rules. Using these feature implication rules, appropriate instances to be fed to SP-LIME are picked. SP-LIME then uses these instances to generate a set of local explanation models and covers the overall decision-making space. Extracting Implication rules from neural networks is also a well-studied problem. These Neural network based approaches depend on various factors such as: Quality of the rules extracted, Algorithmic complexity, Expressive power of the extracted rules, Portability of the rule extraction technique etc. The hybrid approach disclosed herein also utilizes the knowledge of structure in data, however it is not dependent on the blackbox model (ML model). Moreover, formal concept analysis based data analysis provides a solid theoretical basis. FCA provides a useful means for discovering implicational dependencies in complex data. In previous work, FCA-based mechanism has been used as an approach to explain the outcome of a blackbox machine learning model through the construction of lattice structure of the training data and then using that lattice structure to explain the features of predictions made on test data. Thus, the system 100 utilizes the power of FCA to determine implication rules among features and using that to guide the submodular picks for LIME in order to generate local explanations. It provides the benefits of using data-based approach and proxy model based approach in a unified framework.

**SP LIME:** The technique known in the art provides a global understanding of the machine learning model by explaining a set of individual instances. One of the works using SP-Lime, proposes a budget *B* that denotes the number of explanations to be generated. Thereafter, a Pick Step is used to select *B* instances for the user to inspect. The aim of this is to obtain non-redundant explanations that represent how the model behaves globally. This is done by avoiding instances with similar explanations. However, there are some limitations of this approach, a) The SP-LIME algorithm is based on a greedy approach which does not guarantee an optimal solution, and b) the technique runs the model on all instances to maximize the coverage function. Data points are sampled from a Gaussian distribution, ignoring the correlation between features. This can lead to unlikely data points which can then be used to learn local explanation models. Further studies show that the explanations provided by LIME of two very close points varied greatly in a simulated setting. This instability decreases the trust in the produced explanations. Thus, the correct definition of the neighborhood is also an unsolved problem when using LIME with tabular data.

**Formal Concept Analysis (FCA):** FCA, well known in the art is a data mining model that introduces the relation among attributes in a visual form and depicts how objects can be hierarchically grouped together according to their common attributes. Typically for input training dataset of ML models, objects can be considered as features extracted from the training dataset and attributes are the values of those features, which are then used to train ML models. FCA deals with the formalization of concepts grouped together with their common attributes. A formal context *K* = (*G,M, I* ) consists of two sets *G* and *M* and a relation *I* between *G* and *M*. The elements of *G* are called the objects and the elements of *M* are called the attributes of the context. A formal concept of a formal context *K* = (*G,M, I* ) is a pair (*A, B*). The set of all formal concepts of a context K together with the order relation *I* forms a complete lattice, called the concept lattice of *K.*

As mentioned earlier, the hybrid approach disclosed by the method combines the SP-LIME and FCA to improve the accuracy of prediction as compared to only LIME based or only FCA based blackbox explanations, also referred to as Artificial Intelligence (AI) interpretability. The hybrid approach is explained in conjunction with FIG. 2

FIG. 2A and 2B (collectively referred as FIG. 2) is a flow diagram illustrating a method 200 for explainable ML using data and proxy model based hybrid approach, using the system of FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the one or more hardware processors 104 receive a training dataset, wherein the training dataset is used a) to train the ML model for predictions of interest and b) for identifying a plurality of test instances from the training dataset to be used by the proxy model to provide global explanations for the predictions of interest.

At step 204 of the method 200, the one or more hardware processors 104 sample the training dataset to identify the plurality of test instances. FCA-based instances selection is used to take advantage of the underlying structure of data to build a concise and non-redundant set of instances. The steps (204a through 204f) depict the process used by the method 200 for of instances.
a) Extracting a plurality of features from the training dataset with each of the plurality of features having continuous attribute values (204a).
b) Binarizing each of the plurality of features to discretize the continuous attribute values to '1' and '0' (204b). The binarization process can be done in a more formal manner such as in chiMerge algorithm, which ensures that binarization method does not corrupt the generated lattice.
c) Generating a concept lattice for the binarized plurality of features of the training dataset using a Formal Concept Analysis (FCA) based approach (204c). The concept lattice comprises a plurality of concepts representing data of the training dataset and attribute relationships within the training dataset by arranging the training dataset into hierarchical groups based on commonality among the binarized plurality of features. Each concept in the lattice represents the objects sharing some set of properties; and each sub-concept in the lattice represents a subset of the objects. For example, ConExp^{™} concept explorer tool can be used to generate lattice from the training data.
d) Deriving and ranking a plurality of implication rules from the concept lattice to generate a ranked list, wherein the plurality of implication rules are derived based on the FCA approach (204d).The implications rules are chosen based on the criteria of maximum coverage.
e) Selecting a predefined number of implication rules from the ranked list arranged in ascending order of rank (204e).The predefined number (threshold) for the implication rules is empirically computed based on the domain of the predictions.
   Identifying the plurality of test instances from the training dataset corresponding to each of the selected predefined number of implication rules (204f). The plurality of test instances are selected using a redundancy criteria that selects non-redundant explanations represent how the ML model behaves globally by avoiding instances from training dataset with similar explanations. Thus, covers all variations in data without using complete set on instances. Unlike, the SP-LIME algorithm that chooses instances either randomly or completely, wherein both these approaches have their drawbacks, the FCA approach used by the method 200 focusses on the structure of the training data set to select the test instances and does not take into account anything about the ML model. Steps (204d), (204e) and (204f)f are elaborated below:

**Generating Implication Rules from Training Data:** In order to find an optimal subset of samples, also referred as plurality of test instances, from the training dataset and implication rules are generated from the training data. One of the challenge in generating implication rules is that for a given domain and training data, the number of rules can be very large. Therefore, the method 200 shortlists rules based on their expressiveness, e.g. those subset of rules (predefined number implication rules) are selected that have the highest coverage and lowest redundancy. When association rules are generated from the training dataset, conclusion does not necessarily hold for all object, however, it is true for some stated percentage of all objects covering the premise of rule. The rules are generated using this percentage and select the top k rules (predefined number of rules). The value of k is empirically calculated based on a given domain. Examples from 3 domains such as IRIS, Heart disease and Adult Earning are considered by the system 100, and for each domain, depending on the size and structure of data, "k" is decided.

Generating **Lattice Structure and selecting Instances:** Using the lattice structure and implication rules, plurality of instances are selected for guiding SP-LIME. All the instances that follow the implication rules are identified. For each rule in the "implication rules list", whether if a given sample "passes" or "fails" the given criteria is calculated, i.e. if a particular sample s follows implication rule r or not. Finally, a sorted list of the instances (plurality of instances) is identified that are deemed more likely to cover maximally and are non-redundant as well.

**Guided-LIME approach for Global Explanations:** A structured data sampling based approach is used in the Guided-LIME towards the hybrid approach disclosed herein, extending SP-LIME. SP-LIME normally has two methods for sampling: random and full. In the random approach, samples are chosen randomly using a Gaussian distribution. On the other hand, full approach make use of all the instances. As mentioned earlier, the method disclosed herein extents the LIME implementation to integrate FCA that identifies or selects the samples generated using lattice and implication rules.

Pseudo code 1 below explains the steps to perform structured sampling using training data and pass to SP-LIME for generating global explanations. The input to Guided-LIME is training data used to train the ML model. Data processing for finding the best samples for Guided-LIME involves binarization of data. Thereafter, a concept lattice is created based on FCA approach. Using the concept lattice, the implication rules are derived and. These rules are then used to select test instances for Guided-LIME.

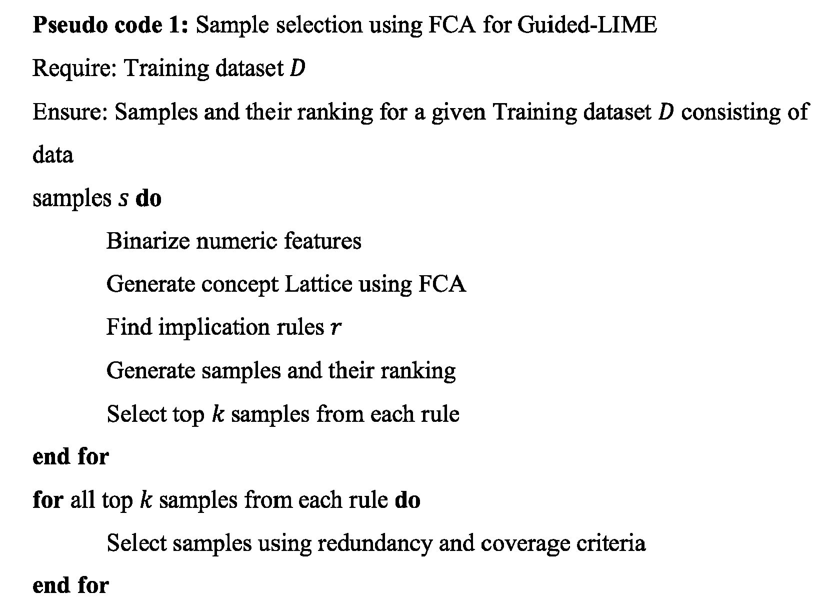

Once the plurality of test instances are identified, at step 206 of the method 200, the one or more hardware processors 104 forward the plurality of test instances to the proxy model to generate global explanations for the predictions of interest generated by the ML model using the SP-LIME approach.

Conventional approaches mostly use a single approach for explanation. This can be done using any of the proposed techniques i.e. proxy model, activation based, or perturbation based approach. However, none of these approaches provides a holistic view in terms of outcome explanation. Whereas, if the hybrid approach disclosed herein is used, wherein it combines the proxy model and data-based approach, a better explanation at a much reduced cost is provided. The reduction in cost is a result of using lesser number of samples rather than taking all the samples in the proxy model, which is not a practical and economic choice for real world huge datasets. However, the FCA enables selection of most appropriate samples to maintain accuracy of explanations. Further, the hybrid approach is model agnostic such as the LIME approach, as the introduced sampling step does not affect the model agnostic characteristic in any manner. It just adds a sampling step which helps in choosing the samples in a systematic manner.

### EXPERIMENTAL ANALYSIS AND RESULTS:

**Experimental Setup:** The publicly available datasets as mentioned in Table 1 are used to evaluate the Guided-LIME system disclosed herein. IRIS dataset contains 3 classes of 50 instances each, where each class refers to a type of iris plant. There are a total of 150 samples with 5 attributes each: sepal length, sepal width, petal length, petal width, class (Iris Setosa, Iris Versicolor, Iris Virginica). Similarly, Heart Disease dataset contains 14 attributes; 303 samples and two classes. Adult Earning dataset contains 48000 samples, 14 features across two classes. The machine learning task for all three datasets is classification. The ML model utilizes, for example, the random forest ML technique, in all experiments.

**TABLE 1:**

| Dataset | Classes | # of instances | # of features | Features |
|---|---|---|---|---|
| IRIS | 3 | 150 | 4 | sepal length, sepal width, petal length, petal width |
| Heart disease | 2 | 303 | 14 | age of patient, sex, chest pain type, resting blood pressure, serum cholesterol, fasting blood sugar, resting ECG, maximum heart rate achieved, exercise induced angina, ST depression induced by exercise relative to rest, peak exercise ST segment, number of major vessels colored by fluoroscopy, Thal, Diagnosis of heart disease |
| Adult Earning | 1 | 3000 | 14 | age, workclass, fnlwgt, education, education-num, marital status, occupation, relationship, race, sex, capital-gain, capital-loss, hours-per-week, native-country |

**Results:** The goal of this experiment is to compare the Guided-LIME approach with random sampling of SP-LIME. A case study is performed to find out which approach is better in selecting important features for a given blackbox model ( herein referred as ML model). As shown in Table 1, the ground truth oracle of important features is maintained as domain knowledge. The random forest classifier is trained with default parameters of scikit-learn. In this experiment, 25% artificially "noisy" features are added in the training data. The value of these features is chosen randomly. In order to evaluate the effectiveness of approach we use FDR (false discovery rate) metric which is defined as the total number of noisy features selected as important features in the explanation. The occurrence of noisy features in the generated explanations is then computed. Ideally, the noisy features should not occur among the important features. Therefore, a lower FDR suggests a better approach for explanation. The discovery of number of noisy features for each explanation averaged over 100 runs is presented. Each explanation consists of a feature importance vector that shows the importance of a particular feature.

FIGS. 3A through 3C (collectively referred as FIG. 3) are graphical illustrations for comparative analysis of the system of FIG. 1 with works in literature, in accordance with some embodiments of the present disclosure. As depicted in FIG. 3A,3B and 3C y axis is the number of noisy features and x axis is index of noisy feature. Those cases are included where a noisy feature is at first or second place in the feature importance vector. AF-1_Imp-1 represents artificial/noisy feature occurring at first place in feature importance vector whereas AF-1_Imp-2 represents artificial/noisy feature occurring at second place. Guided-LIME sampling approach is consistently better than basic SP-LIME.

**TABLE 2:**

| Datasets | With artificial features | | | Without artificial features | | | |
|---|---|---|---|---|---|---|---|
| | blackbox | Guided LIME | SP-LIME | blackbox | Guided-LIME | SP-LIME | Full-LIME |
| Adult earning | 0.061 | 0.065 | 0.041 | 0.056 | 0.065 | 0.041 | 0.059 |
| Heart disease | 0.149 | 0.167 | 0.216 | 0.125 | 0.165 | 0.169 | 0.136 |
| IRIS | 0.106 | 0.042 | 0.033 | 0.038 | 0.006 | 0.08 | 0.031 |

**TABLE 3:**

| Datasets | With artificial features | | | Without artificial features | | | |
|---|---|---|---|---|---|---|---|
| | blackbox | Guided LIME | SP-LIME | blackbox | Guided-LIME | SP-LIME | Full-LIME |
| Adult earning | 0.087 | 0.372 | 0.428 | 0.19 | 0.353 | 0.219 | 0.344 |
| Heart disease | 0.428 | 0.485 | 0.326 | 0.681 | 0.546 | 0.475 | 0.297 |
| IRIS | 0.307 | 0.311 | 0.178 | 0.134 | 0.009 | 0.406 | 0.408 |

**Validating Guided LIME using calibration level:** The objective of this experiment is to validate which proxy model is a closer approximation to original blackbox model (ML model of FIG. 1B) with respect to the prediction probabilities of each model. In order to measure this closeness, various distance metric can be used e.g. KL divergence, cross entropy etc. The well-established ECE (expected calibration error) and MCE (maximum calibration error) as the underlying metric to detect the calibration of both the models. Calibration error provides a better estimate of reliability of ML models. Moreover, the focus of the experiment is to estimate the proximity of the shadow or proxy model w.r.t the original ML model. Calibration error values are therefore used to compare which model is the better approximation of the original model. Hypothesized is that the proxy model with a ECE closer to the original blackbox ML model is a closer approximate. The experiment is performed in two settings: 1) with original data 2) by adding noisy features in the data. As shown in Tables 2 and 3, in both scenarios, ECE and MCE of Guided-LIME is closer to the original ML model in comparison to the random SP-LIME. This justifies the benefit of structured sampling. Experiments are also run on with full samples of LIME. Although, this can be a better approximate of original model, but taking all the samples in the proxy model is not a practical and economic choice for real world huge datasets. Guided-LIME disclosed herein has a closer ECE to the original blackbox model. Hence, Guided-LIME is a better choice as a proxy model to explain the original ML model.

Thus, the method and system disclosed herein improves accuracy in explainable ML by using the hybrid approach based on LIME and FCA for generating explanation by exploiting the structure in training data. FCA helps in structured sampling of instances for generating global explanations. Using the structured sampling, optimal instances are chosen both in terms of quantity and quality to generate explanations and interpret the outcomes. Based on the calibration error metric, it is observed that the Guided-LIME is a closer approximate of the original blackbox ML model, thus improving accuracy in provided explanations.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for explainable Machine Learning (ML), the method comprising:
receiving (202), via one or more hardware processors, a training dataset, wherein the training dataset is used for a) training a ML model for generating predictions of interest and b) identifying a plurality of test instances from the training dataset to be used by a proxy model to provide global explanations for the predictions of interest;
sampling (204), via the one or more hardware processors, the training dataset for identifying the plurality of test instances, comprising:
a) extracting (204a) a plurality of features from the training dataset with each of the plurality of features having continuous attribute values;
b) binarizing (204b) each of the plurality of features to discretize the continuous attribute values to '1' and '0';
c) generating (204c) a concept lattice for the binarized plurality of features of the training dataset using a Formal Concept Analysis (FCA) based approach, wherein the concept lattice comprises a plurality of concepts representing data of the training dataset and attribute relationships within the training dataset by arranging the training dataset into hierarchical groups based on commonality among the binarized plurality of features;
d) deriving (204d) and ranking a plurality of implication rules from the concept lattice to generate a ranked list, wherein the plurality of implication rules are derived based on the FCA approach;
e) selecting (204e) a predefined number of implication rules from the ranked list arranged in ascending order of rank; and
f) identifying (204f) the plurality of test instances from the training dataset corresponding to each of the selected predefined number of implication rules; and
forwarding (206), via the one or more hardware processors, the plurality of test instances to the proxy model to generate global explanations for the predictions of interest generated by the ML model using a Submodular Pick - Local Interpretable Model-agnostic Explanations (SP-LIME) approach.

2. The method of claim 1, wherein the predefined number is empirically computed based on a domain of the predictions of interest.

3. The method of claim 1, wherein the plurality of test instances are selected using a redundancy criteria that selects non-redundant explanations represent how the ML model behaves globally by avoiding instances from training dataset with similar explanations.

4. A system (100) for explainable ML using data and proxy model based hybrid approach, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive a training dataset, wherein the training dataset is used for a) training a ML model for generating predictions of interest and b) identifying a plurality of test instances from the training dataset to be used by a proxy model to provide global explanations for the predictions of interest;
sample the training dataset to identify the plurality of test instances comprising:
a) extract a plurality of features from the training dataset with each of the plurality of features having continuous attribute values;
b) binarize each of the plurality of features to discretize the continuous attribute values to '1' and '0';
c) generate a concept lattice for the binarized plurality of features of the training dataset using a Formal Concept Analysis (FCA) based approach, wherein the concept lattice comprises a plurality of concepts representing data of the training dataset and attribute relationships within the training dataset by arranging the training dataset into hierarchical groups based on commonality among the binarized plurality of features;
d) derive and rank plurality of implication rules from the concept lattice to generate a ranked list, wherein the plurality of implication rules are derived based on the FCA approach;
e) select a predefined number of implication rules from the ranked list arranged in ascending order of rank; and
f) identify the plurality of test instances from the training dataset corresponding to each of the selected predefined number of implication rules; and
forward the plurality of test instances to the proxy model to generate global explanations for the predictions of interest generated by the ML model using a Submodular Pick - Local Interpretable Model-agnostic Explanations (SP-LIME) approach.

5. The system of claim 4, wherein the predefined number is empirically computed based on a domain of the predictions of interest.

6. The system of claim 4, wherein the plurality of test instances are selected using a redundancy criteria that selects non-redundant explanations to represent how the ML model behaves globally by avoiding instances from training dataset with similar explanations.

7. One or more non-transitory machine-readable information storage mediums comprising one or more instructions which when executed by one or more hardware processors cause:
receiving a training dataset, wherein the training dataset is used for a) training a ML model for generating predictions of interest and b) identifying a plurality of test instances from the training dataset to be used by a proxy model to provide global explanations for the predictions of interest;
sampling the training dataset for identifying the plurality of test instances, comprising:
a) extracting a plurality of features from the training dataset with each of the plurality of features having continuous attribute values;
b) binarizing each of the plurality of features to discretize the continuous attribute values to '1' and '0';
c) generating a concept lattice for the binarized plurality of features of the training dataset using a Formal Concept Analysis (FCA) based approach, wherein the concept lattice comprises a plurality of concepts representing data of the training dataset and attribute relationships within the training dataset by arranging the training dataset into hierarchical groups based on commonality among the binarized plurality of features;
d) deriving and ranking a plurality of implication rules from the concept lattice to generate a ranked list, wherein the plurality of implication rules are derived based on the FCA approach;
e) selecting a predefined number of implication rules from the ranked list arranged in ascending order of rank; and
f) identifying the plurality of test instances from the training dataset corresponding to each of the selected predefined number of implication rules; and
forwarding the plurality of test instances to the proxy model to generate global explanations for the predictions of interest generated by the ML model using a Submodular Pick - Local Interpretable Model-agnostic Explanations (SP-LIME) approach.

8. The one or more non-transitory machine-readable information storage mediums of claim 7, wherein the predefined number is empirically computed based on a domain of the predictions of interest.

9. The one or more non-transitory machine-readable information storage mediums of claim 7, wherein the plurality of test instances are selected using a redundancy criteria that selects non-redundant explanations represent how the ML model behaves globally by avoiding instances from training dataset with similar explanations.
